# EUROPEAN PATENT APPLICATION

(11) **EP 4 614 693 A1**
(43) Date of publication of application: **10.09.2025**
(21) Application number: 24205904.6
(22) Date of filing: 10.10.2024
(51) Int. Cl.: H01M 50/204, H01M 50/244, H01M 50/251, H01M 50/289, H01M 50/291, H01M 50/293, H01M 10/613, H01M 10/627

(54) **ENERGY STORAGE SYSTEM**

(30) Priority: 05.03.2024 CN 202420433211 U; 31.03.2024 WO PCT/CN2024/085127
(71) Applicant: Eve Energy Storage Co., Ltd, Wuhan, Hubei 430074 (CN)
(72) Inventor: XIANG, Jian, Wuhan, Hubei, 430074 (CN); ZOU, Yulang, Wuhan, Hubei, 430074 (CN); ZHAO, Zihui, Wuhan, Hubei, 430074 (CN); YI, Haohao, Wuhan, Hubei, 430074 (CN)
(74) Representative: Murgitroyd & Company

(57) **Abstract**

The present application provides an energy storage system, the energy storage system includes a box and an energy storage device. The energy storage device is arranged in the box. The energy storage device includes N battery clusters arranged along a first direction. Each of the battery clusters includes M battery packs arranged and connected in a second direction perpendicular to the first direction, wherein 4 ≤ N ≤ 6, and 5 ≤ M ≤ 8. The energy storage system is capable of reducing the number of internal components and improving the space utilizing rate of box, effectively reduces manufacturing hours, and reduces cost of system manufacturing.

## Description

### CROSS-REFERENCE TO RELATED APPLICATIONS

This application claims priority to Chinese Patent Application No. 202420433211.3, filed on March 05, 2024. The aforementioned applications are herein incorporated by reference in their entireties.

### TECHNICAL FIELD

The following application relates to a technical field of batteries, in particular to an energy storage system.

### BACKGROUND

Most containerized energy storage systems in related technologies use small cells with 280Ah to 320Ah, which make the number of battery clusters of the energy storage system reach 10 or even 12, resulting in having a large number of internal components inside the energy storage system and having a serious waste of container space. Moreover, the containerized energy storage system mostly has a power of 3 MWh to 4 MWh, which cannot effectively improve energy density of the containerized energy storage system, resulting in a low energy density of the containerized energy storage system and a high cost of the power per power of the containerized energy storage system.

### SUMMARY

In view of this, the present application provides an energy storage system capable of reducing the number of internal components and improving a space utilizing rate of a box.

In the first aspect, the present application provides an energy storage system, the energy storage system includes a box and an energy storage device. The energy storage device is arranged in the box. The energy storage device includes N battery clusters arranged along a first direction. Each of the battery clusters includes M battery packs arranged and connected in a second direction perpendicular to the first direction, wherein 4 < N ≤ 6, and 5 ≤ M ≤ 8.

In an optional embodiment of the present application, each of the battery packs includes Q batteries interconnected, wherein 52≤Q≤78, and the battery has a battery capacity of 628 Ah to 942 Ah.

In an optional embodiment of the present application, the energy storage system further includes a plurality of support frames arranged along the first direction. One of the plurality of the support frames includes multiple receiving cavities. The battery packs in a same battery cluster are received in one of the receiving cavities.

In an optional embodiment of the present application, the energy storage system includes a battery thermal management system, a firefighting system, and a convergence cabinet, which are all located in the box and connected to the battery clusters.

In an optional embodiment of the present application, the box includes a partition part, the partition part includes a first partition. The first partition divides the box into a first containing room and a second containing room. The N battery clusters are arranged in the first containing room along the first direction. The battery thermal management system, the firefighting system, and the convergence cabinet are set in the second containing room.

In an optional embodiment of the present application, the partition part further includes a second partition connected to the first partition. The second partition divides the second containing room into a first sub-containing room and a second sub-containing room. The battery thermal management system is located in the first sub-containing room, and the firefighting system and the convergence cabinet are located in the second sub-containing room.

In one embodiment, the first partition is provided with a plurality of wiring holes. The first containing room is communicated with the first sub-containing room and the second sub-containing room respectively through the plurality of the wiring holes.

In an optional embodiment of the present application, the battery thermal management system includes a first-level liquid cooling pipeline, a second-level liquid cooling pipeline, a third-level liquid cooling pipeline, and a thermal management host. One end of the third-level liquid cooling pipeline is connected to the battery pack, and the other end thereof is connected to the second-level liquid-cooling pipeline. One end of the second-level liquid-cooling pipeline away from the third-level liquid cooling pipeline is connected to the first-level liquid cooling pipeline. One end of the first-level liquid cooling pipeline away from the second-level liquid cooling pipeline is connected to the thermal management host.

In an optional embodiment of the present application, the firefighting system includes a plurality of first-level fire-fighting pipelines, a plurality of second-level fire-fighting pipelines, a plurality of third-level fire-fighting pipelines, and a fire host. One end of each of the third-level fire-fighting pipelines is connected to one of the battery packs, and the other end thereof is connected to one of the second-level fire-fighting pipelines. One end of each of the second-level fire-fighting pipelines away from one of the third-level fire-fighting pipelines is connected to the first-level fire-fighting pipeline. The first-level fire-fighting pipeline is connected to the battery pack. One end of the first-level fire-fighting pipeline away from the second-level fire-fighting pipeline is connected to the fire host.

In an optional embodiment of the present application, the convergence cabinet is connected to the N battery clusters. The battery thermal management system, the firefighting system, and the convergence cabinet are located in an extension direction of the N battery clusters in the first direction.

The present application has beneficial effects as follows. The energy storage system includes a box and an energy storage device arranged in the box. The energy storage device includes N battery clusters arranged along a first direction, and each of the battery cluster includes M battery packs arranged and connected in a second direction perpendicular to the first direction, wherein 4 ≤ N ≤ 6, and 5 ≤ M ≤ 8. It can reduce the number of internal components of the energy storage system, improve a box space utilizing rate, effectively reduce manufacturing hours, and reduce cost of system manufacturing.

### BRIEF DESCRIPTION OF THE DRAWINGS

In order to more clearly explain the technical solutions in the embodiments of the present application, the accompanying drawings that need to be used in the description of the embodiments will be briefly introduced below, and it is obvious that the accompanying drawings in the following description are only some embodiments of the present application, and for those skilled in the art, other accompanying drawings can be obtained from these accompanying drawings without making creative labor.
FIG. 1 is a partial structural schematic diagram of an energy storage system provided by an embodiment of the present application.
FIG. 2 is a schematic structural diagram of the energy storage system provided by an embodiment of the present application.
FIG. 3 is a front view of a partial structure of the energy storage system provided by an embodiment of the present application.
FIG. 4 is a right view of a partial structure of the energy storage system provided by an embodiment of the present application.
FIG. 5 is a schematic structural diagram of a partition part of the energy storage system provided by an embodiment of the present application.
FIG. 6 is a top view of a partial structure of an energy storage system provided by an embodiment of the present application.

Attached image markup description: 100-energy storage system; 10-box; 20-energy storage device; 201-battery cluster; 202-battery pack; 203-support frame; 204-battery; 30-thermal management host; 40-fire host; 50-convergence cabinet; 60-partition part; 601-first partition; 602-second partition; 603-first containing room; 604-second containing room; 6041-first sub-containing room; 6042-second sub-containing room; 70-firefighting backup battery.

### DETAILED DESCRIPTION

Hereinafter, the technical solutions in the embodiments of the present application will be clearly and completely described with reference to the accompanying drawings in the embodiments of the present application. Obviously, the described embodiments are only a part of the embodiments of the present application, but not all of the embodiments. Based on the embodiments in the present application, all other embodiments obtained by those skilled in the art without creative work belong to the scope of protection of the present application.

In the description of the present application, it should be understood that the orientation or positional relationship indicated by the terms "upper", "lower", etc. is based on the orientation or positional relationship shown in the drawings, and is only for the convenience of describing the present application and simplifying the description. It is not intended to indicate or imply that the device or element referred to must have a specific orientation, be constructed and operate in a specific orientation, and therefore should not be construed as a limitation on the present application. In addition, the terms "first" and "second" are used for descriptive purposes only and cannot be understood as indicating or implying relative importance or implicitly indicating the quantity of indicated technical features. Thus, features defined as "first" and "second" may explicitly or implicitly include one or more of the described features. In the description of this application, "plurality" means two or more than two, unless otherwise expressly and specifically limited.

This application may repeat reference numbers and/or reference letters in different implementations, such repetition is for the purposes of simplicity and clarity and does not itself indicate a relationship between the various embodiments and/or arrangements discussed.

Among related technologies, most container-type energy storage systems compacted in 20 feet have a power of 3 MWh to 4 MWh, and most containers that are larger than 20 feet are difficult to be transported. The energy storage systems in related technologies mostly adopt an arrangement of using small cells each having a battery power of 280 Ah to 320 Ah, which usually results in a big number of battery clusters in the energy storage system up to 10 or even 12. There are problems such as a large number of internal components and a serious waste of space. Also, there are problems that the energy density of the energy storage system cannot be effectively improved, the energy density of the energy storage system is not high, and the cost of the power per unit of the energy storage system is too high.

The energy storage system provided by the present application will be described in detail below with reference to specific embodiments and drawings.

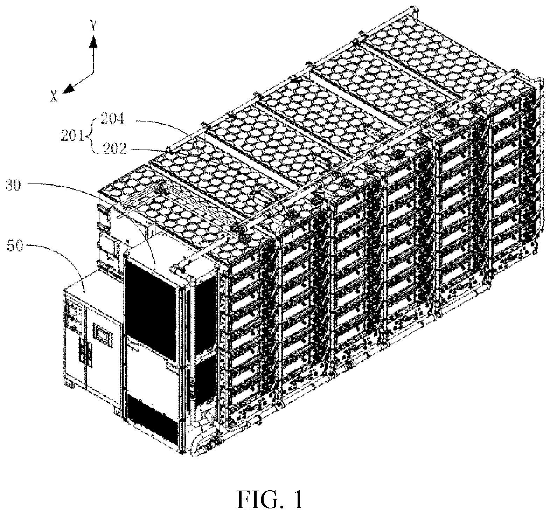

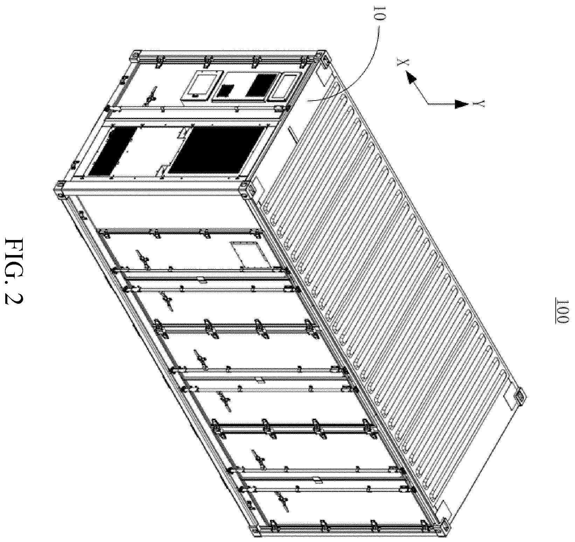

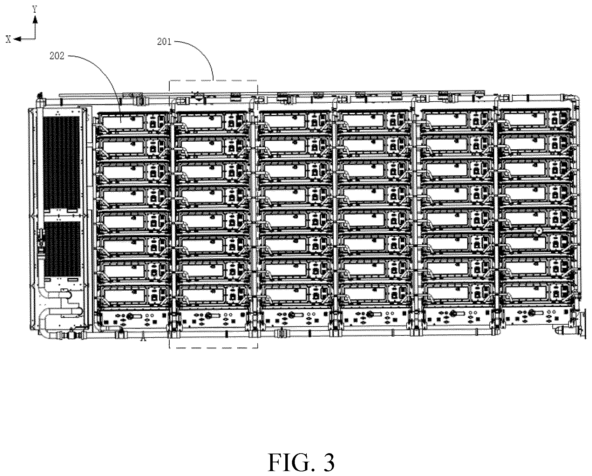

Please refer to FIG. 1, FIG. 2 and FIG. 3, the present application provides an energy storage system 100. The energy storage system 100 includes a box 10 and an energy storage device 20. The energy storage device 20 is arranged in the box 10. The energy storage device 20 includes N battery clusters 201 arranged along a first direction X. Each of the battery clusters 201 includes M battery packs 202 connected in a second direction Y perpendicular to the first direction X, wherein 4 ≤ N ≤ 6, and 5≤ M ≤ 8.

Specifically, the box 10 is a container with a standard size of 20-feet, and the energy storage device 20 is located in the box 10. The energy storage device 20 is arranged in the box 10. The number of the battery clusters 201 is four to six, which reduces the number of internal components of the energy storage system 100.

For example, when the number of the battery clusters 201 is 6, the number of the internal components can be reduced, for example, by more than 40%, which greatly reduces the complexity and cost of manufacturing and improves the space utilizing rate of the box 10. In one embodiment, multiple battery clusters 201 are connected, for example, connected in parallel, or connected in series according to actual needs, depending on actual applications. The connection relationship between the battery clusters 201 is not limited in this application.

In an optional embodiment of the present application, each of the battery packs 202 includes Q batteries 204 interconnected, wherein 52 ≤ Q ≤ 78, and the battery 204 has a battery capacity of 628 Ah to 942 Ah.

For example, when the number of battery clusters 201 is 6, the number of the battery packs 202 is 8, and the battery 204 in the battery pack 202 has a battery capacity of 628 Ah. A power more than 5 MWh can be achieved, which greatly improves an overall energy density of the energy storage system 100. Moreover, based on the number of battery clusters 201, it also has the effect of improving the space utilizing rate of the box 10 and reducing the number of internal components, effectively reducing manufacturing hours and reducing cost of system manufacturing. Specifically, the battery 204 is, for example, a cylindrical battery or a square battery. In other embodiments, when the number of the battery clusters 201 is reduced, the battery can adaptively select a larger capacity, for example, a capacity, which can meet the power requirement above 5 MWh at least. The selecting of the capacity of the battery depends on actual applications.

Specifically, for example, the battery 204 is a cylindrical battery or a square battery. In the present application, the shape of the battery 204 is not limited, and the specific application shall be subject to actual application.

In an optional embodiment of the present application, the energy storage system further includes a plurality of support frames 203 arranged along the first direction X. One of the plurality of the support frames 203 includes multiple receiving cavities. The battery packs 202 in a same battery cluster 201 is received in one of the receiving cavities.

Specifically, the number of the support frames 203 is the same as the number of the battery clusters 201, and the arrangement direction of the support frames 203 is the same as the arrangement direction of the battery clusters 201. The N battery clusters 201 are located in the box 10 and arranged along the first direction X. The N support frames 203 are also located in the box 10 and arranged along the first direction X. Further, each support frame 203 includes multiple layer. The multiple layers are arranged along the second direction Y. The battery packs 202 are placed on each of the multiple layers. The number of the multiple layers is the same as the number of the battery packs 202 in each of the battery clusters 201. For example, the first direction X intersects with the second direction Y. In one embodiment, the first direction X is perpendicular to the second direction Y.

For example, the number of the battery clusters 201 is 6, the number of the battery packs 202 is 8, and the eight battery packs are respectively located on the layers of the support frame 203 along the second direction Y. The six battery clusters 201 are arranged along the first direction X, which greatly reduces the number of internal components of the energy storage system 100.

In an optional embodiment of the present application, the energy storage system 100 includes a battery thermal management system, a firefighting system, and a convergence cabinet 50. The battery thermal management system, the firefighting system, and the convergence cabinet 50 are all located in the box 10 and connected to the battery clusters 201.

In related technologies, the thermal management systems with liquid-cooled components are arranged adjacent to or spaced apart from the battery clusters 201. When the battery cluster 201 undergoes thermal runaway and causes a short circuit inside the battery 204, it is easy to have an impact on the liquid-cooled components connected to the battery cluster 201, and even cause thermal runaway spreads from the battery cluster 201 to the thermal management system, causing the failure of the liquid cooling components or affecting the liquid cooling effect of the liquid cooling components, and affecting the safety of the energy storage system. In addition, the battery clusters 201 are also located adjacent to converging cabinets 50 or other structures, when the thermal runaway occurs in the battery cluster 201, causing an internal short circuit in the battery, it can easily spread to the converging cabinets 50 or other structures, and generate a threat to the safety of the energy storage system.

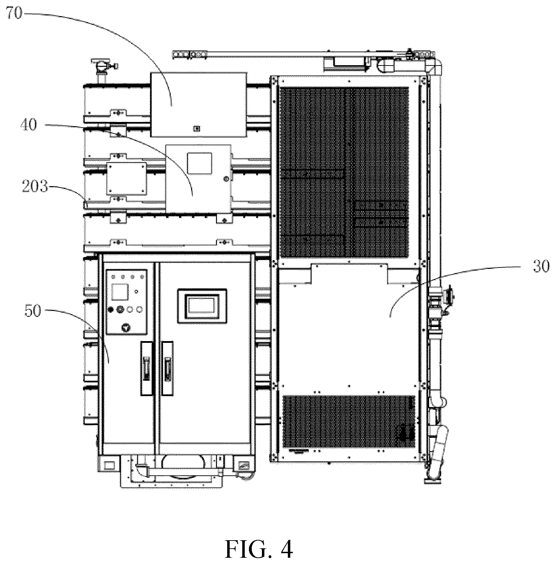

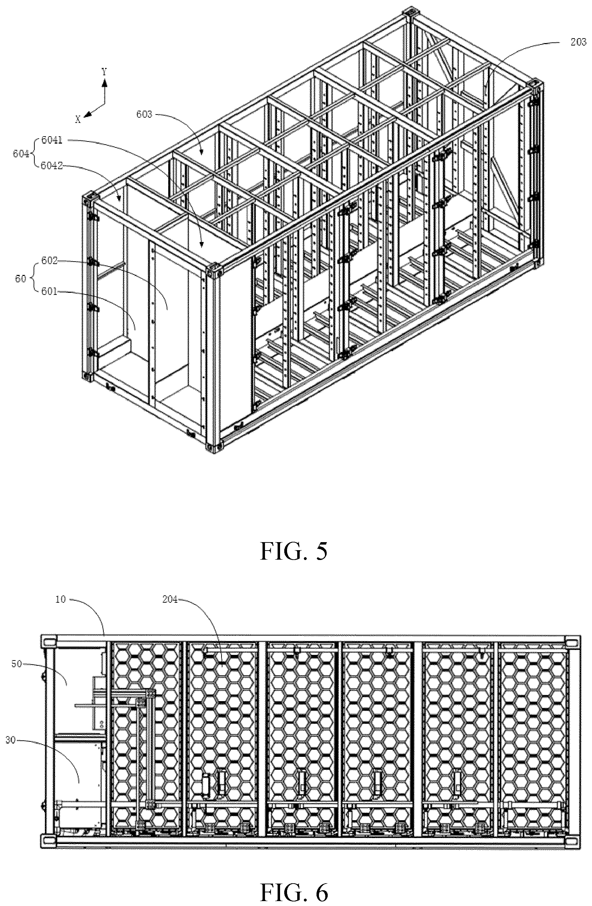

Please refer to FIG. 4 and FIG.5, in an optional embodiment of the present application, the box 10 includes a partition part 60. The partition part 60 includes a first partition 601. The first partition 601 divides the box 10 into a first containing room 603 and a second containing room 604. The N battery clusters 201 are arranged in the first containing room 603 along the first direction X. The battery thermal management system, the firefighting system, and the convergence cabinet 50 are set in the second containing room 604.

Specifically, the first partition 601 separates the N battery clusters 201 from the battery thermal management system, the firefighting system, and the convergence cabinet 50 and plays a fire prevention function. When the battery cluster 201 undergoes thermal runaway, causing an internal short circuit in the battery, the first partition 601 reduces the impact of the thermal runaway on the liquid cooling effect of the battery thermal management system, and reduces the impact of the thermal runaway on the battery thermal management system.

Moreover, the first containing room 603 formed by the first partition 601 and a part of the box 10 is significantly isolated. The N battery clusters 201 are located in the first containing room 603 and are separated from the battery thermal management system to reduce the impact of external factors on the N battery clusters 201. Preferably, the partition part 60 is made of materials having thermal insulation, heat-insulating and non-flammable properties, such as the partition part 60 is made of vacuum sandwich panels or rock wool boards, but is not limited thereto. So that the partition part 60 has a thermal insulation function to reduce the impact of extreme external factors on the electric quantity of the N battery clusters 201, thereby improving the safety of the energy storage system.

Specifically, a thickness of the partition part 60 may be, for example, 30 mm to 50 mm, and may preferably be 50 mm, depending on the actual application.

In an optional embodiment of the present application, the partition part 60 further includes a second partition 602 connected to the first partition 601. The second partition 602 divides the second containing room 604 into a first sub-containing room 6041 and a second sub-containing room 6042. The battery thermal management system is located in the first sub-containing room 6041. The firefighting system and the convergence cabinet 50 are located in the second sub-containing room 6042.

Specifically, for example, the first partition 601 and the second partition 602 may be arranged in a T-shape to effectively prevent the occurrence of thermal short circuit. The firefighting system and the convergence cabinet 50 are arranged along the second direction Y to improve the space utilizing in the box 10. The firefighting system and the convergence cabinet 50 cannot be exposed to the outside. In one embodiment, the first partition 601 and the second partition 602 separate the battery thermal management system and the firefighting system from the convergence cabinet 50 into different accommodation rooms. The convergence cabinet 50 and the firefighting system that cannot be exposed to the outside are located in one accommodation room, and the battery thermal management system is located in another accommodation room to reduce the influence of thermal runaway on components in different accommodation rooms. When any component among the battery cluster, the firefighting system, the convergence cabinet 50 and the battery thermal management system suffers from thermal runaway or other fire safety, the first partition 601 and the second partition 602 can isolate them in corresponding accommodation rooms, which reduces thermal runaway or other fire safety impacts on the safety of other components, ensures the safety of the energy storage system, and reduces maintenance costs.

In one embodiment, the first partition 601 is provided with a plurality of wiring holes. The first containing room 603 is respectively connected to the first sub-containing room 6041 and the second sub-containing room 6042 respectively through the plurality of the wiring holes. The plurality of the wiring holes are configured to accommodate connection wire harnesses of the firefighting system, the convergence cabinet 50 and the battery thermal management system. The connection wire harnesses may be, for example, connected to the battery clusters or external parts. The plurality of the wiring holes are located at the bottom of the first partition 601 to reduce the impact of the wiring holes on the function of the first partition 601.

In one embodiment, the first partition 601 is provided with a locking device at a position corresponding to the first sub-containing room 6041 and the second sub-containing room 6042, and the locking device is assembled on one side of a fire host 40 and the convergence cabinet 50 facing the first partition 601 to fix the fire host 40 and the converging cabinet 50 on the first partition 601.

Please refer to FIG. 4 to FIG. 6, in an optional embodiment of the present application, the energy storage system 100 further includes a battery thermal management system located in the box 10. The battery thermal management system includes a first-level liquid cooling pipeline, a second-level liquid cooling pipeline, a third-level liquid cooling pipeline and a thermal management host 30. One end of the third-level liquid cooling pipeline is connected to the battery pack 202, and the other end thereof is connected to the second-level liquid-cooling pipeline. One end of the second-level liquid-cooling pipeline away from the third-level liquid cooling pipeline is connected to the first-level liquid cooling pipeline. One end of the first-level liquid cooling pipeline away from the second-level liquid cooling pipeline is connected to the thermal management host 30.

Specifically, the battery pack 202 has an internal liquid-cooling pipeline. The internal liquid-cooling pipeline is attached to the battery 204 to improve heat exchange efficiency. One end of the three-level liquid cooling pipeline is connected to the internal liquid-cooling pipeline of the battery pack 202, another end of the three-level liquid cooling pipeline is connected to the second-level liquid cooling pipeline, and the second-level liquid cooling pipeline is connected to the first-level liquid cooling pipeline to form a liquid cooling circulation loop to dissipate heat and cool the battery pack 202.

Further, for example, there are multiple liquid cooling circulation loops formed by the first-level liquid cooling pipeline, the second-level liquid cooling pipeline, the third-level liquid cooling pipeline and the internal liquid cooling pipeline. For example, a plurality of the first-level liquid cooling pipelines may be connected in parallel, and there are cooling liquid in each of the liquid cooling circulation loops for cooling the battery pack 202.

Furthermore, the box 10 is provided with an access door at a position corresponding to the battery thermal management system. An opening direction of the access door is toward a side away from the battery clusters 201. Therefore, when the battery thermal management system fails, the operator only needs to open the access door to repair the battery thermal management system failed outside the box 10 without entering inside of the box 10.

In an optional embodiment of the present application, the energy storage system 100 includes a firefighting system located in the box 10. The firefighting system includes a plurality of first-level fire-fighting pipelines, a plurality of second-level fire-fighting pipelines, a plurality of third-level fire-fighting pipelines and a fire host 40. One end of each of the third-level fire-fighting pipelines is connected to one of the battery packs 202, and the other end thereof is connected to one of the second-level fire-fighting pipelines. One end of each of the second-level fire-fighting pipelines away from one of the third-level fire-fighting pipelines is connected to the first-level fire-fighting pipeline. The first-level fire-fighting pipeline is connected to the battery pack 202. One end of the first-level fire-fighting pipeline away from the second-level fire-fighting pipeline is connected to the fire host 40.

Specifically, the battery pack 202 has an internal fire-fighting pipeline. One end of the third-level fire-fighting pipeline is connected to the internal fire-fighting pipeline of the battery pack 202, and the other end thereof is connected to the second-level fire-fighting pipeline. The second-level fire-fighting pipeline is connected to the first-level fire-fighting pipeline to perform firefighting control on the battery pack 202. For example, the pipelines are filled with fire extinguishing agent. When the fire signal is triggered, the fire extinguishing agent enters the battery pack 202 through the pipelines to achieve extinguish fire accurately.

Further, for example, there are multiple firefighting pipelines formed by the first-level fire-fighting pipelines, the second-level fire-fighting pipelines, the third-level fire-fighting pipelines and the internal fire-fighting pipelines. Multiple first-level fire-fighting pipelines, for example, can be connected in parallel to implement fire control of multiple battery packs 202.

For example, when the number of battery clusters 201 is 6, the number of components of the battery thermal management system and the firefighting system can be reduced, for example, reduced by about 40%.

Further, the energy storage system 100 also includes a firefighting backup battery 70. The firefighting backup battery 70 is connected to the fire host 40. When an abnormality occurs in the external power supply or the internal circuit and causes abnormal power supply to the fire host 40, the firefighting backup battery 70 supply energy to the fire host 40 to avoid fire loopholes.

Specifically, the firefighting backup battery 70 is located on the same side as the firefighting system to improve space utilizing rate and reduce the complexity of the system process.

Furthermore, the box 10 is provided with an access door at a position corresponding to the firefighting system. An opening direction of the access door is toward a side away from the battery cluster 201. Therefore, when the firefighting system fails, the operator only needs to open the access door to repair the firefighting system failed outside the box 10 without entering inside of the box 10.

In an optional embodiment of the present application, the firefighting system further includes a plurality of fire detectors installed on the support frames 203 and connected to the fire host 40.

Specifically, the number of the support frames 203 is N, and the number of the fire detectors is also N. The fire detector is provided on the support frame 203 of each battery cluster 201 to perform fire detection on each battery cluster 201 respectively. In one embodiment of the present application, for example, the fire detector is a composite fire detector. For example, it can detect parameters such as the temperature of the battery cluster 201, ambient temperature, and smoke concentration in the box 10. When it is detected that the parameters above exceed a predetermined value, that is, the firefighting system is triggered, and the fire extinguishing agent flows into the battery pack 202 according to the fire detector at the corresponding position to perform fire extinguish treatment for the battery pack 202.

In an optional embodiment of the present application, the energy storage system 100 includes a convergence cabinet 50 located in the box 10. The N battery clusters 201 are connected to the convergence cabinet 50.

Specifically, the convergence cabinet 50 is connected to the battery clusters 201. A main switch of the battery clusters 201 is provided in the convergence cabinet 50. At the same time, the convergence cabinet 50 includes a controller connected to the battery thermal management system, the firefighting system, etc., a manual operation panel and information of the battery thermal management system and the firefighting system are also provided in the convergence cabinet 50. In most cases, the operator only needs to open the convergence cabinet 50 to judge the operation of the energy storage system, and can control the power supply of the entire energy storage system through the main switch of the battery cluster 201. Specifically, the energy storage system and the external circuit are also connected through the convergence cabinet 50. In order to be able to shut down the corresponding battery cluster 201 individually when the battery pack 202 fails, each battery cluster 201 is provided with an independent disconnect switch.

Furthermore, the box 10 is provided with an access door at a position corresponding to the convergence cabinet 50 to facilitate maintenance. An opening direction of the access door is toward a side away from the battery cluster 201. Therefore, when the combiner cabinet 50 fails, the operator only needs to open the access door to repair the convergence cabinet 50 failed outside the box 10 without entering inside of the box 10.

Further, the battery thermal management system, the firefighting system, and the convergence cabinet 50 are all located on the same side of the box 10, but are not limited thereto.

In an optional embodiment of the present application, the battery thermal management system, the firefighting system, and the convergence cabinet 50 are located in an extension direction of the N battery clusters 201 in the first direction X.

Specifically, the battery thermal management system, the firefighting system and the convergence cabinet 50 are located on the same side of the box 10, which improves space utilizing and facilitates maintenance.

In an optional embodiment of this application, the energy storage system 100 includes a battery management system located in the box 10 and connected to multiple battery packs 202 respectively.

Specifically, the battery management system may be located in the battery pack 202, for example, and is responsible for collecting and monitoring data such as temperature and voltage of the battery pack 202, and managing and controlling the battery pack 202.

The energy storage system provided by the present application includes at least the following working processes or principles: the energy storage system includes a box 10 and an energy storage device 20. The energy storage device 20 is located in the box 10. The energy storage device 20 includes N battery clusters 201. The battery clusters 201 include M battery packs connected to each other, wherein 4 ≤ N ≤ 6 and 5 ≤ M ≤ 8. It can reduce the number of internal components and improve the space utilizing rate of the box 10. The box 10 is made of industry standard containers (for example: 20-feet container), which facilitates road transportation and reduces transportation costs. The battery 204 has a battery capacity of 628 Ah to 942 Ah. Based on this battery capacity, only 4 to 6 battery clusters and 5 to 8 battery packs per battery cluster can achieve more than 5 MWh of power, which greatly improves an overall energy density of the energy storage system.

In summary, although the present application has disclosed the above in terms of preferred embodiments, the above preferred embodiments are not intended to limit the present application, and those skilled in the art can make various modifications and retouches without departing from the spirit and scope of the present application, so the scope of protection of the present application is subject to the scope defined by the claims.

## Claims

1. An energy storage system, comprising:
a box; and
an energy storage device arranged in the box; wherein the energy storage device comprises N battery clusters arranged along a first direction, each of the battery clusters includes M battery packs interconnected in a second direction perpendicular to the first direction, 4 ≤ N ≤ 6, and 5≤M≤8.

2. The energy storage system according to claim 1, wherein each of the battery packs includes Q batteries interconnected, wherein 52 ≤ Q ≤ 78, and the battery has a battery capacity of 628 Ah to 942 Ah.

3. The energy storage system according to claim 1, wherein the energy storage system further comprises a plurality of support frames arranged along the first direction, one of the plurality of the support frames includes multiple receiving cavities, the battery packs in a same battery cluster are received in one of the receiving cavities.

4. The energy storage system according to claim 1, wherein the energy storage system further comprises a battery thermal management system, a firefighting system, and a convergence cabinet; the battery thermal management system, the firefighting system and the convergence cabinet are all located in the box and connected to the battery clusters.

5. The energy storage system according to claim 4, wherein the box comprises a partition part, the partition part comprises a first partition, the first partition divides the box into a first containing room and a second containing room, and the N battery clusters are arranged in the first containing room along the first direction; wherein the battery thermal management system, the firefighting system, and the convergence cabinet are set in the second containing room.

6. The energy storage system according to claim 5, wherein the partition part further comprises a second partition connected to the first partition, the second partition divides the second containing room into a first sub-containing room and a second sub-containing room, the battery thermal management system is located in the first sub-containing room, and the firefighting system, and the convergence cabinet are located in the second sub-containing room.

7. The energy storage system according to claim 6, wherein the first partition is provided with a plurality of wiring holes, the first containing room is respectively connected to the first sub-containing room and the second sub-containing room respectively through the plurality of the wiring holes.

8. The energy storage system according to any one of claims 4 to 7, wherein the battery thermal management system comprises a first-level liquid cooling pipeline, a second-level liquid cooling pipeline, a third-level liquid cooling pipeline and a thermal management host; one end of the third-level liquid cooling pipeline is connected to the battery pack, and the other end thereof is connected to the second-level liquid-cooling pipeline; and one end of the second-level liquid-cooling pipeline away from the third-level liquid cooling pipeline is connected to the first-level liquid cooling pipeline, and one end of the first-level liquid cooling pipeline away from the second-level liquid cooling pipeline is connected to the thermal management host.

9. The energy storage system according to any one of claims 4 to 7, wherein the firefighting system comprises a plurality of first-level fire-fighting pipelines, a plurality of second-level fire-fighting pipelines, a plurality of third-level fire-fighting pipelines and a fire host; one end of each of the third-level fire-fighting pipelines is connected to one of the battery packs, and the other end thereof is connected to one of the second-level fire-fighting pipelines; and one end of each of the second-level fire-fighting pipelines away from one of the third-level fire-fighting pipelines is connected to the first-level fire-fighting pipeline, the first-level fire-fighting pipeline is connected to the battery pack, and one end of the first-level fire-fighting pipeline away from the second-level fire-fighting pipeline is connected to the fire host.

10. The energy storage system according to any one of claims 4 to 7, wherein the convergence cabinet is connected to the N battery clusters; and the battery thermal management system, the firefighting system, and the convergence cabinet are located in an extension direction of the N battery clusters in the first direction.

11. The energy storage system according to claim 9, wherein the energy storage system further comprises a firefighting backup battery, the firefighting backup battery is connected to the fire host.

12. The energy storage system according to claim 15, wherein the first partition is provided with a locking device at a position corresponding to the first sub-containing room and the second sub-containing room, and the locking device is assembled on one side of a fire host and the convergence cabinet facing the first partition to fix the fire host and the converging cabinet on the first partition.

13. The energy storage system according to claim 6, wherein the first partition and the second partition may be arranged in a T-shape.

14. The energy storage system according to claim 5, wherein the partition part is made of materials having thermal insulation, heat-insulating and non-flammable properties.

15. The energy storage system according to claim 5, wherein a thickness of the partition part is ranged from 30 mm to 50 mm.
